# EUROPEAN PATENT APPLICATION

(11) **EP 4 721 698 A1**
(43) Date of publication of application: **08.04.2026**
(21) Application number: 24825172.0
(22) Date of filing: 12.06.2024
(51) Int. Cl.: A61C 9/00, G06T 7/00

(54) **THREE-DIMENSIONAL MODEL-BASED DATA PROCESSING METHOD AND APPARATUS, DEVICE AND MEDIUM**

(30) Priority: 21.06.2023 CN 202310738938
(71) Applicant: Shining 3D Tech Co., Ltd., Hangzhou, Zhejiang 311258 (CN)
(72) Inventor: WANG, Jialei, Hangzhou, Zhejiang 311258 (CN); ZHAO, Xiaobo, Hangzhou, Zhejiang 311258 (CN); JIANG, Tengfei, Hangzhou, Zhejiang 311258 (CN); ZHANG, Jian, Hangzhou, Zhejiang 311258 (CN)
(74) Representative: Manitz Finsterwald Patent- und Rechtsanwaltspartnerschaft mbB
(86) International application number: PCT/CN2024/098640
(87) International publication number: WO 2024/260276

(57) **Abstract**

Embodiments of the present disclosure relate to a data processing method, apparatus, device, and medium based on a 3D model, wherein the method includes: obtaining a 3D tooth model of a target oral cavity; determining a tooth number corresponding to each tooth type in the target oral cavity according to the 3D tooth model. Therefore, the robustness and efficiency of tooth number determination are improved.

## Description

The present disclosure claims the priority of the Chinese patent application No. 202310738938.2 filed with the China National Intellectual Property Administration on June 21, 2023, with the invention title "Data Processing Method, Apparatus, Device and Medium Based on 3D Model", the entire content of which is incorporated into the present disclosure by reference.

### TECHNICAL FIELD

The present disclosure relates to the field of 3D digitization, and in particular to a data processing method, apparatus, device and medium based on a 3D model.

### BACKGROUND

Digital intraoral impression is widely used in the field of orthodontics due to its efficiency and safety. Orthodontists need to identify and mark tooth numbers for digital impression data of teeth to formulate diagnosis and treatment plans. However, due to large variation in the shape of different teeth, tooth irregularities, tooth misalignment and/or missing teeth of some patients and incompleteness of digital tooth models, it may lead significant challenges.

In the related art, it may directly and manually mark tooth number on digital impressions. Nevertheless, the marking method not only requires the investment of a large amount of time and effort but also has high requirements for the operator's professional skills, which may lead omissions and misjudgments, further resulting in low accuracy in determining tooth numbers.

### SUMMARY

To address the above technical problem or at least partially address the problem, the present disclosure provides a data processing method based on a 3D model, apparatus, device, and medium.

An embodiment of the present disclosure provides a data processing method based on a 3D model. The method includes: obtaining a 3D tooth model of a target oral cavity; and determining the tooth number corresponding to each tooth type in the target oral cavity based on the 3D tooth model.

An embodiment of the present disclosure further provides a data processing apparatus based on a 3D model, including: an obtaining module configured to obtain a 3D tooth model of a target oral cavity; and a determination module configured to determine the tooth number corresponding to each tooth type in the target oral cavity based on the 3D tooth model.

An embodiment of the present disclosure also provides an electronic device. The electronic device includes: a processor; a memory for storing executable instructions of the processor; and the processor configured to read the executable instructions from the memory and execute the instructions to implement the data processing method based on a 3D model provided in the embodiments of the present disclosure.

An embodiment of the present disclosure further provides a computer-readable storage medium, where the storage medium stores a computer program, and the computer program is used to execute the data processing method based on a 3D model provided in the embodiments of the present disclosure.

Compared with the existing technologies, the technical solutions provided by the embodiments of the present disclosure have the following advantages.

The solution for determining tooth number provided by the embodiments of the present disclosure may obtain a 3D tooth model of the target oral cavity, and then determine the tooth number corresponding to each tooth type in the target oral cavity based on the 3D tooth model. Thus, it may accurately determine tooth numbers without relying on prior detection results such as instance segmentation or object detection, resulting in higher efficiency and stronger robustness for determining tooth number.

It should be understood that the above general description and the following detailed description are merely exemplary and explanatory, and shall not limit the present disclosure.

### BREIF DESCRIPTION OF DRAWS

The above and other features, advantages, and aspects of the various embodiments of the present disclosure will become more clear when considered in conjunction with the accompanying drawings and the following detailed description. Throughout the drawings, the same or similar reference numerals denote the same or similar elements. It should be understood that the drawings are schematic, and the original parts and elements are not necessarily drawn to scale.
FIG. 1 is a schematic flowchart of a data processing method based on a 3D model provided by an embodiment of the present disclosure;
FIG. 2 is a schematic diagram of a 3D tooth model provided by an embodiment of the present disclosure;
FIG. 3 is a schematic diagram of 2D tooth images corresponding to a plurality of viewing angles provided by an embodiment of the present disclosure;
FIG. 4 is a schematic diagram of a tooth type region provided by an embodiment of the present disclosure;
FIG. 5 is a schematic diagram of connections between mesh vertices and mesh patches provided by an embodiment of the present disclosure;
FIG. 6 is a schematic scene diagram of tooth number marking points provided by an embodiment of the present disclosure;
FIG. 7 is a schematic diagram of sample data marking provided by an embodiment of the present disclosure;
FIG. 8 is a schematic structural diagram of a data processing apparatus based on a 3D model provided by an embodiment of the present disclosure;
FIG. 9 is a schematic structural diagram of an electronic device provided by an embodiment of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms and should not be construed as being limited to the embodiments set forth herein; instead, these embodiments are provided to enable a more thorough and complete understanding of the present disclosure. It should be understood that the drawings and embodiments of the present disclosure are only for illustrative purposes and are not intended to limit the protection scope of the present disclosure.

It should be understood that the various steps described in the method implementations of the present disclosure may be executed in different orders and/or executed in parallel. In addition, method implementations may include additional steps and/or omit the steps shown for execution. The scope of the present disclosure is not limited in the regard.

As used herein, the term "comprising" and its variations are open-ended, i.e., "including but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms will be provided in the following description.

It should be noted that concepts such as "first" and "second" mentioned in the present disclosure are only used to distinguish different devices, modules or units, and are not used to limit the order of functions performed by these devices, modules or units or their interdependencies.

It should be noted that the modifications of "one" and "plurality" mentioned in the present disclosure are illustrative rather than restrictive. Those skilled in the art should understand that unless clearly indicated otherwise in the context, they should be understood as "one or more".

The names of messages or information interacted between multiple devices in the implementations of the present disclosure are only for illustrative purposes and are not used to limit the scope of these messages or information.

To address the above-mentioned problem, the embodiments of the present disclosure provide a data processing method based on a 3D model. The method will be introduced below in conjunction with specific embodiments.

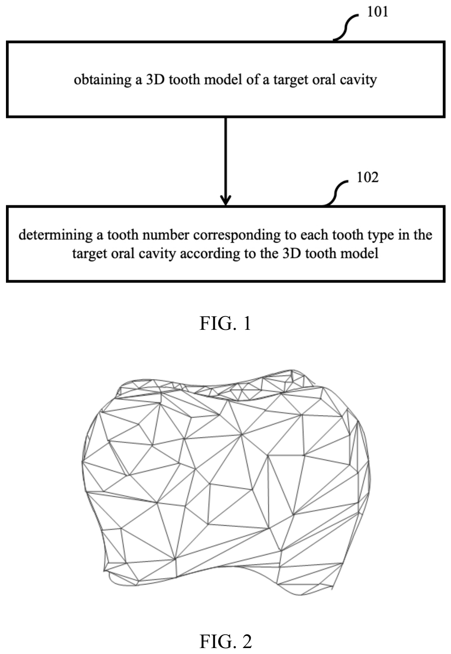

FIG. 1 is a schematic flowchart of a data processing method based on 3D model provided by an embodiment of the present disclosure. The method can be executed by a data processing apparatus based on 3D model. The apparatus may be implemented by software and/or hardware, and is generally integrable into an electronic device. As shown in FIG. 1, the method includes the following steps.

Step 101: Obtaining a 3D tooth model of a target oral cavity.

Specifically, 3D tooth data may be obtained by scanning the target oral cavity through a preset 3D data scanning device. The preset 3D data scanning device may be a high-precision intraoral scanner or the like. The intraoral scanner may use a probe-type optical scanning head to directly scan the interior of the patient's oral cavity, project active light patterns onto the teeth, gums, mucous membranes, and other structures in the oral cavity using a digital projection system based on imaging principle of structured light triangulation, and obtain 3D tooth data by performing 3D reconstruction and stitching based on algorithm processing after the camera acquisition system captures the patterns. In addition, the 3D tooth model mentioned above includes a plurality of mesh patches including a plurality mesh vertices, wherein each mesh patch may generally be a triangular patch formed by three mesh vertices. As can be seen from the partial 3D tooth model shown in FIG. 2, the 3D tooth model is constructed by triangular mesh patches.

Step 102: Determining a tooth number corresponding to each tooth type in the target oral cavity according to the 3D tooth model.

In one embodiment of the present disclosure, after the 3D tooth model is obtained, the tooth number corresponding to each tooth type in the target oral cavity is determined based on the 3D tooth model.

It should be noted that in different application scenarios, the manners for determining the tooth number corresponding to each tooth type in the target oral cavity based on the 3D tooth model may vary, and examples are as follows.

In some possible embodiments, the 3D tooth model may be input into a tooth number determination model which is pre-trained. The tooth number determination model is a pre-trained model which may be used to determine the tooth number corresponding to each tooth type based on the 3D tooth model. Furthermore, the tooth number may be determined according to output of the tooth number determination model.

In some possible embodiments, the tooth number corresponding to each tooth type may be determined according to the 3D tooth model using an automatic recognition algorithm. In the actual execution process, the automatic recognition algorithm in the present embodiment may vary in different scenarios. As a possible implementation, the algorithm recognition process of the automatic recognition algorithm includes: obtaining a plurality of 2D tooth images corresponding to a plurality of viewing angles of the 3D tooth model, wherein the 3D tooth model includes a plurality of mesh patches including multiple mesh vertices.

In the present example, after obtaining the 3D tooth model, it may not use object detection network or instance segmentation network in traditional technologies to identify individual teeth and then inferring tooth number information based on the number of identified individual teeth. However, considering that the 3D tooth model is 3D data, both the object detection network and the instance segmentation network would consume a relatively long time and may be affected easily by noise data in 3D space; moreover, the accuracy of the algorithm would directly affect the accuracy of subsequent tooth number recognition. In the present example, instead of obtaining prior data such as the number of teeth based on algorithms like instance segmentation or object detection, it may obtain a plurality of 2D tooth images corresponding to a plirality of viewing angles of the 3D tooth model, wherein each 2D tooth image corresponds to different the viewing angles. Thus, the confirmation of subsequent information such as tooth numbers is performed based on the 2D tooth images.

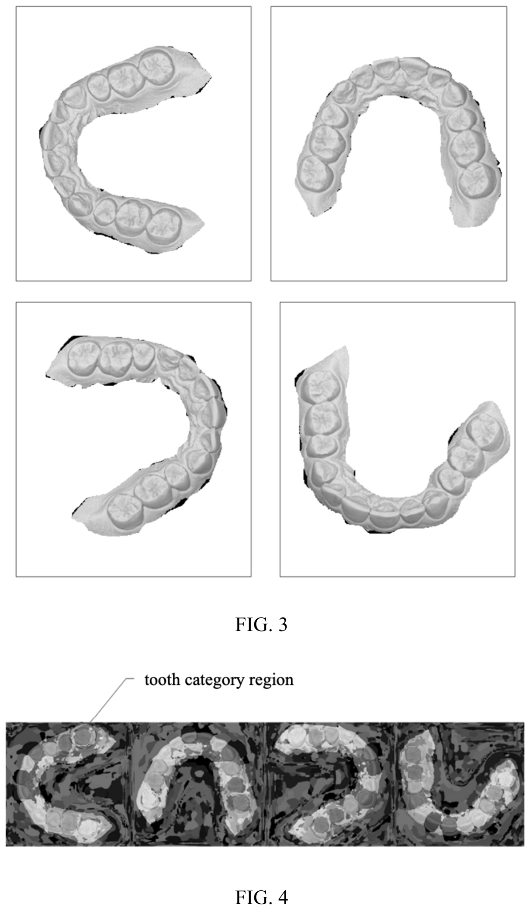

For example, as shown in FIG. 3, four 2D tooth images of the 3D tooth model corresponding to four viewing angles may be determined, and the viewing angles of the four 2D tooth images are all different.

Furthermore, a plurality of tooth type regions included in each 2D tooth image and a first set of tooth number probabilities for each pixel in the plurality of tooth type regions may be identified. The first set of tooth number probabilities includes a plurality of first tooth number probabilities corresponding to each pixel and a plurality of candidate tooth numbers.

In one embodiment of the present disclosure, a plurality of tooth type regions included in each 2D tooth image are identified, wherein each tooth type region corresponds to an area where the same tooth is located, each tooth type region belongs to an area where the same tooth number is located, and different tooth type regions correspond to areas where different tooth numbers are located. Continuing to take the scenario shown in FIG. 3 as an example, when different tooth type regions are labeled with different colors, as shown in FIG. 4, the pixel points belonging to the same tooth in the four 2D tooth images obviously belong to the same tooth type region. For example, the aforementioned FIG. 4 includes 12 individual teeth, 12 tooth type regions may be obtained after identification. It should be emphasized that only tooth type regions are identified in the present embodiment, and the tooth number corresponding to each tooth type region is not determined at current moment.

In the present embodiment, a first set of tooth number probabilities for each pixel in the plurality of tooth type regions is determined, wherein the first set of tooth number probabilities includes a plurality of first tooth number probabilities corresponding to each pixel in the tooth type region and a plurality of candidate tooth numbers. For example, when the target oral cavity corresponds to a single jaw including 16 individual tooth types, the plurality of the candidate tooth numbers correspond to 16 tooth numbers. For pixel A belonging to a tooth type, respective first set of tooth number probabilities includes the probabilities that A belongs to each of the 16 tooth numbers.

In the present example, after the first set of tooth number probabilities is determined, the tooth number corresponding to each tooth type in the target oral cavity is determined based on the first set of tooth number probabilities.

In some possible implementation, when taking the point with maximum first tooth number probability value in each tooth type as the tooth number marking point of the corresponding tooth type, the tooth number corresponding to the tooth number marking point may determined as the tooth number of respective tooth type. For example, the tooth type region of tooth type z includes 10,000 pixel points, the pixel point corresponding to the maximum first tooth number probability is W; then, the No. 1 tooth number corresponding to W is determined as the tooth number corresponding to tooth type z.

In some possible implementation, a second set of tooth number probabilities for each mesh patch is determined according to the first set of tooth number probabilities, wherein the second set of tooth number probabilities includes a plurality of second tooth number probabilities corresponding to each mesh patch and a plurality of candidate tooth numbers.

The tooth number recognition results in the 2D tooth images may be mapped to the 3D tooth model. Therefore, it not only ensures the recognition accuracy of tooth numbers but also avoids performing operations such as object detection and instance segmentation directly on the 3D tooth model.

In the present embodiment, a second set of tooth number probabilities for each mesh patch may be determined based on the first set of tooth number probabilities, wherein the second set of tooth number probabilities includes a plurality of second tooth number probabilities corresponding to each mesh patch and a plurality of candidate tooth numbers. For example, when the target oral cavity corresponds to a single jaw including 16 individual tooth types, the plurality of the candidate tooth numbers correspond to 16 tooth numbers; for mesh patch B, the second tooth number probabilities include the probabilities that B belongs to one of the 16 tooth numbers respectively.

It should be noted that in different application scenarios, the manners for determining the second set of tooth number probabilities for each mesh patch based on the first set of tooth number probabilities may vary. Examples are described as follows.

In some possible embodiments, at least one associated pixel point corresponding to each mesh patch is determined from pixel points corresponding to the plurality of tooth type regions.

For example, a coordinate conversion relationship between each 2D tooth image and the 3D tooth model may be determined in advance. Further, based on the coordinate conversion relationship, respective 2D coordinate point of any mesh point in each mesh patch in each 2D tooth image is determined. If the respective 2D coordinate point is found, the pixel point at the respective 2D coordinate point is determined as the associated pixel point.

For example, at least one observation viewing angle from which the respective mesh patch may be observable can be determined from a plurality of viewing angles; at least one 2D tooth image corresponding to the at least one observation viewing angle is determined as at least one associated 2D tooth image. Further, the associated pixel point corresponding to each mesh patch is determined in each associated 2D tooth image, thereby obtaining at least one associated pixel point corresponding to each mesh patch.

In some possible implementation, a coordinate conversion relationship between each 2D tooth image and the 3D tooth model may be determined in advance. Further, each 2D tooth image is mapped to the 3D tooth model according to the coordinate conversion relationship; based on the mapped 3D tooth model, the pixel points belonging to each mesh patch in each associated 2D tooth image are determined as associated pixel points. When there are a plurality of pixel points belonging to each mesh patch in each associated 2D tooth image, one of the pixel points may be randomly selected as the associated pixel point; when a mesh patch only corresponds to a single pixel point in the associated 2D tooth image, the single pixel point may be determined as the associated pixel point corresponding to the mesh patch.

The coordinate conversion relationship is used to realize the mapping between the original tooth images and the 3D tooth data. It should be noted that the manners for determining the coordinate conversion relationship may vary in different application scenarios, and examples are as follows.

In some possible embodiments, a plurality of reference pixel points in the 2D tooth image are obtained, and a plurality of reference 3D points matching the plurality of reference pixel points are determined in the 3D tooth model, wherein each reference pixel point and respective reference 3D point belong to a same point on the tooth, and the matching of the plurality of reference pixel points and the reference 3D points can be implemented based on feature matching algorithms or the like.

Further, the 2D coordinates of each reference pixel point and the 3D coordinates of respective reference 3D point may be obtained, and the coordinate conversion relationship is determined according to the 2D coordinates and 3D coordinates. Based on the coordinate conversion relationship, the 3D coordinate position of each 2D pixel point in the 2D tooth image within the 3D tooth model can be determined.

In some possible embodiments, the internal parameters and external parameters of the camera used to capture the 2D tooth image may also be obtained; and the coordinate conversion relationship may be determined according to the internal parameters, the external parameters of the camera and the triangle theorem.

In some embodiments, in the actual execution process, algorithms, for example, the Scale Invariant Feature Transform (SIFT) algorithm, Speeded Up Robust Features (SURF) algorithm, and Binary Robust Invariant Scalable Keypoints (BRISK) algorithm, can also be used to determine the coordinate conversion relationship.

Further, after determining at least one associated pixel point corresponding to each mesh patch from the pixel points corresponding to the plurality of the tooth type regions, a first probability mean value of at least one first tooth number probability corresponding to each candidate tooth number may calculated based on the at least one first set of tooth number probabilities corresponding to the at least one associated pixel point. The first probability mean value may be used as the second tooth number probability that each mesh patch belongs to the corresponding candidate tooth number, thereby obtaining the second set of tooth number probabilities for each mesh patch. For example, as shown in Table 1 below, for mesh patch C, if its respective observation viewing angles are View 1, View 2, View 3, and View 4, then the associated pixel point in the associated 2D tooth image corresponding to View 1 is pixel c1, the associated pixel point in the associated 2D tooth image corresponding to View 2 is pixel c2, the associated pixel point in the associated 2D tooth image corresponding to View 3 is pixel c3, and the associated pixel point in the associated 2D tooth image corresponding to View 4 is pixel c4, wherein the first set of tooth number probabilities for c1 is the first column in Table 1, the first set of tooth number probabilities for c2 is the second column in Table 1, the first set of tooth number probabilities for c3 is the third column in Table 1, and the first set of tooth number probabilities for c4 is the fourth column in Table 1. The first probability mean value corresponding to candidate tooth number 0 may be calculated as face[0], which is the mean of the first tooth number probabilities that c1 belong to candidate tooth number 0, the first tooth number probabilities that c2 belong to candidate tooth number 0, the first tooth number probabilities that c3 belong to candidate tooth number 0 and the first tooth number probabilities that c4 belong to candidate tooth number 0. The first probability mean value corresponding to candidate tooth number 1 is face[1], which is the mean of the first tooth number probabilities that c1 belong to candidate tooth number 1, the first tooth number probabilities that c2 belong to candidate tooth number 1, the first tooth number probabilities that c3 belong to candidate tooth number 1 and the first tooth number probabilities that c4 belong to candidate tooth number 1.... The first probability mean value corresponding to candidate tooth number 15 is face[15], which is the mean of the first tooth number probabilities that c1 belong to candidate tooth number 15, the first tooth number probabilities that c2 belong to candidate tooth number 15, the first tooth number probabilities that c3 belong to candidate tooth number 15 and the first tooth number probabilities that c4 belong to candidate tooth number 15. In this way, the 16 second tooth number probabilities included in the second set of tooth number probabilities corresponding to C are obtained as follows: face[0] = 0... face[4] = (0.06 + 0.11) / 4 = 0.043; face[5] = (0.93 + 0.83 + 0.75) / 4 = 0.628; face[6] = (0.01 + 0.06 + 0.25) / 4 = 0.08... face[15] = 0.

**Table 1**

| first set of tooth number probabilities for c1 | first set of tooth number probabilities for c2 | first set of tooth number probabilities for c3 | first set of tooth number probabilities for c4 |
|---|---|---|---|
| Pixel c1 [0]=0 | Pixel c2[0]=0 | Pixel c3[0]=0 | Pixel c4[0]=0 |
| ...... | ...... | ...... | ...... |
| Pixel c1[4]=0.06 | Pixel c2[4]=0.11 | Pixel c3[4]=0 | Pixel c4[4]=0.3 |
| Pixel c1[5]=0.93 | Pixel c2[5]=0.83 | Pixel c3[5]=0.75 | Pixel c4[5]=0 |
| Pixel c1[6]=0.01 | Pixel c2[6]=0.06 | Pixel c3[6]=0.25 | Pixel c4[6]=0 |
| ...... | ...... | ...... | ...... |
| Pixel c1[15]=0 | Pixel c2[15]=0 | Pixel c3[15]=0 | Pixel c4[15]=0 |

After determining the second set of tooth number probabilities, a third set of tooth number probabilities for each mesh vertex is determined based on the second set of tooth number probabilities. The third set of tooth number probabilities includes a plurality of third tooth number probabilities corresponding to each mesh vertex and a plurality of candidate tooth numbers.

In one embodiment of the present disclosure, after obtaining the second set of tooth number probabilities, the third set of tooth number probabilities for each mesh vertex may further be obtained by mapping the second tooth number probabilities corresponding to the second set of tooth numbers to each mesh vertex. The third set of tooth number probabilities includes a plurality of third tooth number probabilities corresponding to each mesh vertex and a plurality of candidate tooth numbers. In the present embodiment, a plurality of associated mesh patches connected to each mesh vertex may be determined; further, based on the plurality of second sets of tooth number probabilities corresponding to the plurality of associated mesh patches, a second probability mean value of the plurality of second tooth number probabilities corresponding to each candidate tooth number is calculated. The third set of tooth number probabilities for the mesh vertex may be obtained by using the second probability mean value as the third tooth number probability that each mesh vertex belongs to respective candidate tooth number.

**Table 2**

| the second sets of tooth number probabilities for F1000 | the second sets of tooth number probabilities for F1001 | the second sets of tooth number probabilities for F1002 | the second sets of tooth number probabilities for F1003 | the second sets of tooth number probabilities for F1004 |
|---|---|---|---|---|
| face1000[0]= 0 | face1001[0]= 0 | face1002[0]= 0 | face1003[0]= 0 | face1004[0]= 0 |
| ... | ...... | ... | ... | ... |
| face1000[3]= | face1001[3]= | face1002[3]= | face1003[3]= | face1004[3]= |
| 0 | 0 | 0 | 0 | 0.713 |
| face1000[4]= 0 | face1001[4]= 0 | face1002[4]= 0 | face1003[4]= 0 | face1004[4]= 0.713 |
| face1000[5]= 0.043 | face1001[5]= 0.113 | face1002[5]= 0.023 | face1003[5]= 0.123 | face1004[5]= 0 |
| face1000[6]= 0.008 | face1001[6]= 0.001 | face1002[6]= 0.021 | face1003[6]= 0.001 | face1004[6]= 0 |
| face1000[7]= 0 | face1001[7]= 0 | face1002[7]= 0 | face1003[7]= 0 | face1004[7]= 0.123 |
| face1000[8]= 0.175 | face1001[8]= 0.06 | face1002[8]= 0.05 | face1003 [8]= 0.01 | face1004[8]= 0.02 |
| ... | ... | ... | ... | ... |
| face1000[15] =0 | face1001[15] =0 | face1002[15] =0 | face1003[15] =0 | face1004[15] =0 |

After obtaining the third set of tooth number probabilities, the tooth number corresponding to each tooth type in the 3D tooth model may be determined based on the third set of tooth number probabilities.

In one embodiment of the present disclosure, after obtaining the third set of tooth number probabilities, the probability values indicating that respective mesh vertex belongs to a plurality of the candidate tooth numbers may be obtained. And then the tooth number marking points corresponding to each tooth type in the 3D tooth model may be determined according to the third set of tooth number probabilities, and the tooth number corresponding to each tooth number marking point may be used as the tooth number of respective tooth type. Thus, by fusing the tooth number probabilities related to the pixel points of the 2D tooth images with the tooth number probabilities related to the mesh patches, the tooth numbers may be obtained, which may achieve higher calculation efficiency and may not rely on prior results from object detection or instance segmentation performed on the 3D tooth model, thereby improving the robustness of tooth number determination.

In some possible embodiments, a maximum reference third tooth number probability in the third set of tooth number probabilities in each mesh vertex corresponding to each tooth type region may be determined. For example, tooth type region 1 includes N mesh vertices (where N is a natural number); in the N third sets of tooth number probabilities corresponding to the N mesh vertices, the maximum value in each third set of tooth number probabilities is determined as the maximum reference third tooth number probability to obtain N maximum reference third tooth number probabilities. Further, the tooth number corresponding to tooth type region 1 is determined according to the N maximum reference third tooth number probabilities. For example, in the N maximum reference third tooth number probabilities, m maximum reference third tooth number probabilities may correspond to tooth number 5, wherein m is less than or equal to N, and the ratio of m to N is greater than a preset ratio threshold, which may ensure that the maximum reference third tooth number probabilities of most mesh vertices included in tooth type region 1 correspond to tooth number 5. Thus, the maximum target third tooth number probability may be determined from all the maximum reference third tooth number probabilities of the tooth number corresponding to each tooth type region, which mean that the maximum value of the m maximum reference third tooth number probabilities corresponding to tooth number 5 may be determined as the maximum target third tooth number probability. Further, the mesh vertex corresponding to the maximum target third tooth number probability is determined as the tooth number corresponding to each tooth type region, which means that the mesh vertex corresponding to the maximum value of the m maximum reference third tooth number probabilities may be determined as the tooth number marking point, and the tooth number corresponding to the tooth number marking point is tooth number 5.

Further, after determining the tooth number marking points, applications in relevant scenarios may be implemented based on the tooth number marking points. For example, in some possible application scenarios, the tooth number marking points may be used to denoise interference caused by irregular shapes, buccal side noise data, or the like. In the present embodiment, it is first determined whether there are a plurality of to-be-filtered tooth number marking points belonging to a same tooth number. If there are a plurality of to-be-filtered marking points, the marking distance between each to-be-filtered tooth number marking point and the tooth number marking points of other adjacent tooth numbers may be calculated; and then the to-be-filtered tooth number marking points with a marking distance smaller than a preset distance threshold may be deleted.

Specifically, considering that the distance between different tooth numbers should not be too small and comparing incorrectly judged tooth number marking points with the actual tooth number marking points, the marking distance between the actual tooth number marking point and the tooth number marking points of other adjacent tooth number is larger than the marking distance between an incorrectly judged tooth number marking point and the tooth number marking points of other adjacent tooth positions. Therefore, in the embodiments of the present disclosure, some tooth position marking points that may be incorrectly determined due to the above-mentioned interference may be deleted according to the distance between the tooth number marking points of different tooth positions.

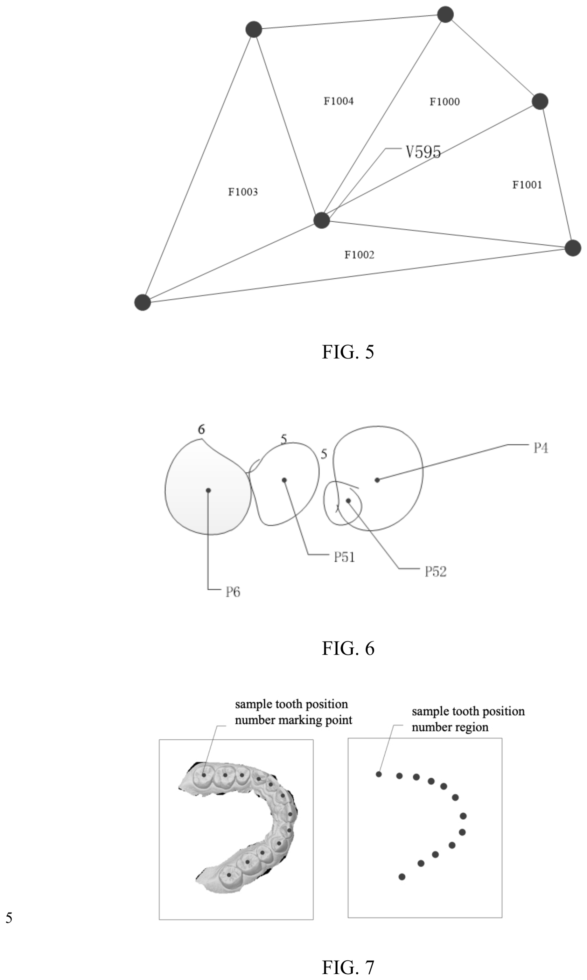

For example, as shown in FIG. 6, if the tooth number marking points of the target oral cavity include two to-be-filtered tooth position marking points P51 and P52 corresponding to tooth number 5, wherein P52 may be buccal tissue or the like. The other tooth numbers adjacent to tooth number 5 are tooth number 4 and tooth number 6, wherein the tooth number marking point for tooth number 4 is P4, and the tooth number marking point for tooth number 6 is P6. The marking distances between P51 and P4, and between P51 and P6 are L1 and L2 respectively; the marking distances between P52 and P4, and between P52 and P6 are L3 and L4 respectively (specific marking distances are not labeled in the FIG.6). Based on the above marking distances, it is found that the marking distance L3 between P52 and P4 is less than the preset distance threshold, P52 is deleted.

In other possible application scenarios, after determining the tooth numbers, they may also be used to meet the requirements of other scenarios. For example, it may be determined based on missing tooth numbers, for example, identifying missing teeth, and so on.

Thus, in the above-described embodiments, a 3D tooth model of the target oral cavity is obtained, and a plurality of 2D tooth images corresponding to a plurality of viewing angles of the 3D tooth model are obtained. The 3D tooth model includes a plurality of mesh patches including multiple mesh vertices. A plurality of tooth type regions included in each 2D tooth image are identified, and a first set of tooth number probabilities for each pixel in the plurality of tooth type regions is determined. The first set of tooth number probabilities includes a plurality of first tooth number probabilities corresponding to each pixel and a plurality of candidate tooth numbers. Further, a second set of tooth number probabilities for each mesh patch is determined based on the first set of tooth number probabilities, wherein the second set of tooth number probabilities includes a plurality of second tooth number probabilities corresponding to each mesh patch and the plurality of candidate tooth numbers. A third set of tooth number probabilities for each mesh vertex is then determined according to the second set of tooth number probabilities, wherein the third set of tooth number probabilities includes a plurality of third tooth number probabilities corresponding to each mesh vertex and the plurality of candidate tooth numbers. Finally, the tooth number corresponding to each tooth type in the 3D tooth model is determined based on the third set of tooth number probabilities. Therefor, by fusing the tooth number probabilities of mesh patches and mesh vertices, tooth numbers are accurately determined, which does not rely on prior detection results from techniques such as instance segmentation or object detection, thereby resulting in higher efficiency and stronger robustness of determining tooth number.

In summary, the data processing method based on a 3D model according to the embodiments of the present disclosure may obtain a 3D tooth model of the target oral cavity, and further determine the tooth number corresponding to each tooth type in the target oral cavity based on the 3D tooth model, thereby improving the robustness and efficiency of tooth number determination.

Based on the above embodiments, in the aforementioned embodiment where the tooth number corresponding to each tooth type in the target oral cavity is determined based on the first set of tooth number probabilities, a pre-trained deep learning model may be used to identify the plurality of tooth type regions included in each 2D tooth image and the first set of tooth number probabilities for each pixel in the tooth type regions. Specifically, each 2D tooth image may be input into the pre-trained deep learning model, and the plurality of tooth type regions output by the deep learning model and the first set of tooth number probabilities for each pixel in the multiple tooth type regions are obtained. The training process of the deep learning model is described below with reference to an embodiment.

In one embodiment of the present disclosure, a sample 3D tooth model is obtained, and a plurality of initial sample 2D tooth images corresponding to a plurality of viewing angles of the 3D tooth model are obtained. Each tooth type region in each initial sample 2D tooth image is determined, and a sample tooth number marking point is identified in the central area of each tooth type region. That is, the sample tooth number marking point is usually located in the central area of the tooth type, so that the sample tooth number region determined subsequently falls within the tooth type region. Alternatively, as shown in FIG. 7, the center point of the tooth type region may be directly determined as the sample tooth number marking point, and so on.

It should be emphasized that in the present training process, a single point such as the sample tooth number marking point is not used as the training sample data. Considering that it is relatively difficult to perform backpropagation on the loss value of a single sample point during training, in the actual training process, after determining the sample tooth number marking points, a sample tooth number region for each tooth type in each initial sample 2D tooth image is determined with the sample tooth number marking point as the center, wherein the sample tooth number region belongs to respective tooth type region. That is, with continued reference to FIG. 7, the sample tooth number marking points are expanded to regions within the tooth type regions, and the deep learning model is trained using the regions as the granularity. Since the loss value calculated at the regional granularity can be easily backpropagated, the training difficulty of the deep learning model is reduced, and the accuracy of the trained deep learning model is improved, which may ensure that in practical applications, the response of the tooth number marking points and some nearby pixel points is the strongest, thereby making it easier to position respective tooth numbers.

In addition, it should be further emphasized in the present embodiment that when determining the sample tooth number region for each tooth type in each initial sample 2D tooth image with the sample tooth number marking point as the center, it is not necessary to identify the contour of each tooth and determine entire tooth area as the sample tooth number region. Instead, it is only necessary to ensure that the sample tooth number region belongs to respective tooth type region. That is, with continued reference to FIG. 7, the sample tooth number region may be a partial area within the tooth type region, thereby avoiding learning noise data at the edge of the tooth area, improving the model training efficiency, and further ensuring the accuracy of the trained deep learning model.

In different application scenarios, the manners of determining the sample tooth number region for each tooth type in each initial sample 2D tooth image with the sample tooth number marking point as the center may vary. In some possible embodiments, the sample tooth number marking point may be used as the center, and a cluster scattered outward based on a Gaussian distribution can be taken as the sample tooth number region. The manner of determining the sample tooth number region based on the Gaussian distribution and the sample tooth number marking point may be implemented by existing technologies, which will not be elaborated here.

In some possible embodiments, the sample tooth number marking point may be used as the center point, and a circular region with a preset radius distance from the center point may be determined as the sample tooth number region. The preset radius distance may be calibrated according to actual scenarios, etc.

Further, marked sample 2D tooth images may be obtained based on the sample tooth number regions corresponding to the tooth type regions. It may train model parameters of a pre-constructed deep learning model using the initial sample 2D tooth images and the marked sample 2D tooth images to obtain a trained deep learning model. Specifically, the initial sample 2D tooth images are input into the initial deep learning model, and the tooth number regions corresponding to the respective tooth numbers output by the model are obtained. The loss value between the tooth number regions and the sample tooth number regions in respective marked samples is calculated. If the loss value is greater than the preset loss threshold, the model parameters in the initial deep learning model may be adjusted until the loss value is less than the preset loss threshold, and then the training of the deep learning model is completed.

In summary, in the data processing method based on a 3D model according to the embodiments of the present disclosure, during the training of the deep learning model, partial tooth regions belonging to respective teeth are used as training data, thereby improving the accuracy of the deep learning model and ensuring the precision of identifying the plurality of tooth type regions included in each 2D tooth image and the first set of tooth number probabilities for each pixel in the plurality of tooth type regions based on the pre-trained deep learning model.

To implement the above-described embodiments, the present disclosure further provides a data processing apparatus based on a 3D model.

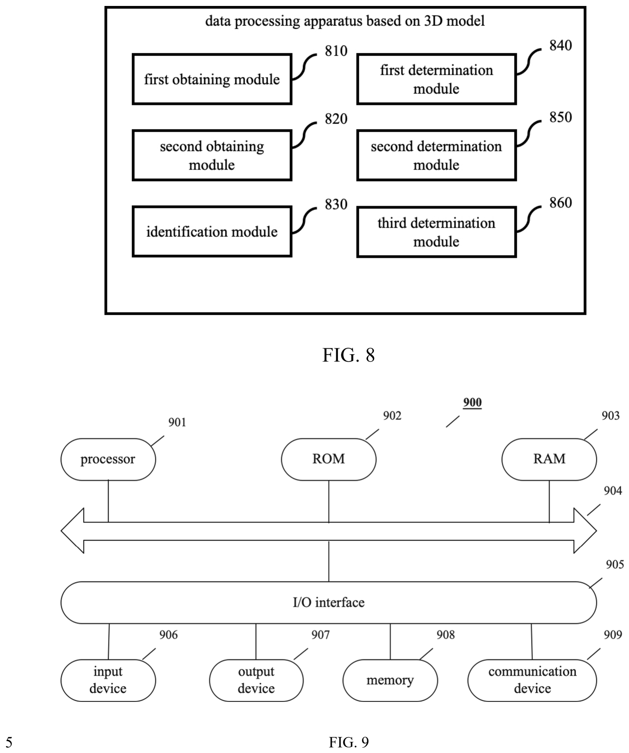

FIG. 8 is a schematic structural diagram of a data processing apparatus based on a 3D model provided in an embodiment of the present disclosure. The apparatus may be implemented by software and/or hardware, and can generally be integrated into an electronic device. As shown in FIG. 8, the apparatus includes: an obtaining module 810 and a determination module 820.

The obtaining module 810 is configured to obtain a 3D tooth model of a target oral cavity;
The determination module 820 is configured to determine the tooth number corresponding to each tooth type in the target oral cavity based on the 3D tooth model.

The data processing apparatus based on a 3D model provided in the embodiment of the present disclosure may execute the data processing method based on a 3D model provided in any embodiment of the present disclosure, and has functional modules and beneficial effects corresponding to the execution method, which will not be repeated herein.

To implement the above-described embodiments, the present disclosure further provides a computer program product, which includes computer programs/instructions. When the computer programs/instructions are executed by a processor, the data processing method based on a 3D model in the above-described embodiments is implemented.

FIG. 9 is a schematic structural diagram of an electronic device provided by an embodiment of the present disclosure.

With specific reference to FIG. 9 below, it shows a schematic structural diagram of an electronic device 900 suitable for implementing the embodiments of the present disclosure. The electronic device 900 in the embodiments of the present disclosure may include, but is not limited to, mobile terminals such as mobile phones, notebook computers, digital broadcast receivers, Personal Digital Assistants (PDAs), Tablet Computers (PADs), Portable Multimedia Players (PMPs), in-vehicle terminals (e.g., in-vehicle navigation terminals), etc., as well as fixed terminals such as digital TVs, desktop computers, and the like. The electronic device shown in FIG. 9 is merely an example and should not impose any limitation on the functions and scope of use of the embodiments of the present disclosure.

As shown in FIG. 9, the electronic device 900 may include a processor (e.g., a central processing unit, a graphics processing unit, etc.) 901, which can execute various appropriate actions and processes according to programs stored in a read-only memory (ROM) 902 or programs loaded from a memory 908 into a random access memory (RAM) 903. In the RAM 903, various programs and data required for the operation of the electronic device 900 are also stored. The processor 901, the ROM 902, and the RAM 903 are connected to each other through a bus 904. An input/output (I/O) interface 905 is also connected to the bus 904.

Typically, the following devices may be connected to the I/O interface 905: input devices 906 including, for example, a touch screen, a touch pad, a keyboard, a mouse, a camera, a microphone, an accelerometer, a gyroscope, etc.; output devices 907 including, for example, a liquid crystal display (LCD), a speaker, a vibrator, etc.; a memory 908 including, for example, a magnetic tape, a hard disk, etc.; and a communication device 909. The communication device 909 may enable the electronic device 900 to perform wireless or wired communication with other devices to exchange data. Although FIG. 9 shows the electronic device 900 with various devices, it should be understood that it is not required to implement or have all the devices shown. Instead, more or fewer devices may be implemented or provided.

In particular, according to the embodiments of the present disclosure, the processes described above with reference to the flowcharts can be implemented as computer software programs. For example, the embodiments of the present disclosure include a computer program product, which comprises a computer program carried on a non-transitory computer-readable medium. The computer program contains program code for executing the method shown in the flowchart. In such an embodiment, the computer program may be downloaded and installed from a network via the communication device 909, or installed from the memory 908, or installed from the ROM 902. When the computer program is executed by the processor 901, the above-mentioned functions defined in the data processing method based on a 3D model according to the embodiments of the present disclosure are performed.

It should be noted that the computer-readable medium mentioned above in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated in a baseband or as part of a carrier wave, in which computer-readable program code is carried. Such a propagated data signal may take various forms, including but not limited to electromagnetic signals, optical signals, or any suitable combination of the above. A computer-readable signal medium may also be any computer-readable medium other than a computer-readable storage medium, and the computer-readable signal medium may send, propagate, or transmit a program for use by or in combination with an instruction execution system, apparatus, or device. The program code contained on the computer-readable medium may be transmitted via any appropriate medium, including but not limited to: wires, optical cables, radio frequency (RF), etc., or any suitable combination of the above.

In some implementations, the client and the server can communicate using any currently known or future-developed network protocol such as HyperText Transfer Protocol (HTTP), and can be interconnected with any form or medium of digital data communication (e.g., a communication network). Examples of communication networks include local area networks (LANs), wide area networks (WANs), the Internet (e.g., the World Wide Web), and peer-to-peer networks (e.g., ad hoc peer-to-peer networks), as well as any currently known or future-developed networks.

The aforementioned computer-readable medium may be included in the above-described electronic device; alternatively, it may exist independently without being integrated into the electronic device.

The aforementioned computer-readable medium carries one or more programs. When the one or more programs are executed by the electronic device, the electronic device is caused to perform the relevant method steps in the above-described embodiments.

The electronic device may write computer program code for performing the operations of the present disclosure using one or more programming languages or a combination thereof. The aforementioned programming languages include, but are not limited to, object-oriented programming languages such as Java, Smalltalk, and C++, and also include conventional procedural programming languages such as the "C" language or similar programming languages. The program code may be executed entirely on the user's computer, partially on the user's computer, executed as a stand-alone software package, partially on the user's computer and partially on a remote computer, or entirely on the remote computer or server. In cases involving a remote computer, the remote computer may be connected to the user's computer through any type of network, including a local area network (LAN) or a wide area network (WAN), or may be connected to an external computer (e.g., via an Internet connection using an Internet service provider).

The flowcharts and block diagrams in the accompanying drawings illustrate the possible implementation architectures, functions, and operations of systems, methods, and computer program products according to various embodiments of the present disclosure. In this regard, each block in the flowchart or block diagram may represent a module, program segment, or part of code that contains one or more executable instructions for implementing the specified logical function. It should also be noted that in some alternative implementations, the functions labeled in the blocks may occur in an order different from that labeled in the drawings. For example, two consecutively shown blocks may actually be executed substantially in parallel, or they may sometimes be executed in the reverse order, depending on the functions involved. It should also be noted that each block in the block diagrams and/or flowcharts, and combinations of blocks in the block diagrams and/or flowcharts, can be implemented by dedicated hardware-based systems that perform the specified functions or operations, or by combinations of dedicated hardware and computer instructions.

The units involved in the embodiments of the present disclosure may be implemented in software or hardware. The name of a unit does not constitute a limitation on the unit itself in some cases.

The functions described above in this document may be performed, at least in part, by one or more hardware logic components. For example, without limitation, exemplary types of hardware logic components that may be used include: Field-Programmable Gate Arrays (FPGAs), Application-Specific Integrated Circuits (ASICs), Application-Specific Standard Products (ASSPs), System-on-Chips (SoCs), and Complex Programmable Logic Devices (CPLDs), among others.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media would include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing.

The above description is merely a preferred embodiment of the present disclosure and an explanation of the technical principles applied. Those skilled in the art should understand that the scope of disclosure involved in the present disclosure is not limited to the technical solution formed by the specific combination of the above technical features, but should also cover other technical solutions formed by any combination of the above technical features or their equivalent features without departing from the above disclosure concept. For example, technical solutions formed by replacing the above features with (but not limited to) technical features with similar functions disclosed in the present disclosure.

In addition, although operations are depicted in a specific order, this should not be understood as requiring these operations to be performed in the specific order shown or in sequential order. Under certain circumstances, multitasking and parallel processing may be advantageous. Similarly, although several specific implementation details are included in the above discussion, these should not be construed as limiting the scope of the present disclosure. Certain features described in the context of separate embodiments can also be implemented in combination in a single embodiment. Conversely, various features described in the context of a single embodiment can also be implemented separately in multiple embodiments or in any suitable subcombination.

Although the subject matter has been described using language specific to structural features and/or methodological logical acts, it should be understood that the subject matter defined in the appended claims is not necessarily limited to the specific features or acts described above. Rather, the specific features and acts described above are merely example forms of implementing the claims.

The data processing method based on a 3D model provided by the embodiments of the present disclosure may accurately determine tooth numbers without relying on prior detection results such as instance segmentation or object detection, thereby achieving higher efficiency and stronger robustness in tooth number determination, and thus having strong industrial applicability.

## Claims

1. A data processing method based on a 3D Model, **characterized by** comprising:
obtaining a 3D tooth model of a target oral cavity;
determining a tooth number corresponding to each tooth type in the target oral cavity according to the 3D tooth model.

2. The method according to claim 1, **characterized in that** determining the tooth number corresponding to each tooth type in the target oral cavity according to the 3D tooth model comprises:
obtaining a plurality of 2D tooth images corresponding to a plurality of viewing angles of the 3D tooth model, wherein the 3D tooth model comprises a plurality of mesh patches comprising a plurality of mesh vertices;
identifying a plurality of tooth type regions comprised in each of the 2D tooth images, and a first set of tooth number probabilities for each pixel in the plurality of tooth type regions, wherein the first set of tooth number probabilities comprises a plurality of first tooth number probabilities corresponding to the each pixel and a plurality of candidate tooth numbers;
determining the tooth number corresponding to each tooth type in the target oral cavity according to the first set of tooth number probabilities.

3. The method according to claim 1 or 2, **characterized in that** determining the tooth number corresponding to each tooth type in the target oral cavity according to the first set of tooth number probabilities comprises:
according to the first set of tooth number probabilities, determining a second set of tooth number probabilities for each mesh patch, wherein the second set of tooth number probabilities comprises a plurality of second tooth number probabilities corresponding to each mesh patch and the plurality of candidate tooth numbers;
determining a third set of tooth number probabilities for each mesh vertex according to the second set of tooth number probabilities, wherein the third set of tooth number probabilities comprises a plurality of third tooth number probabilities corresponding to each mesh vertex and the plurality of candidate tooth numbers;
determining the tooth number corresponding to each tooth type in the 3D tooth model according to the third set of tooth number probabilities.

4. The method according to any one of claims 1-3, **characterized in that** identifying the plurality of tooth type regions comprised in each of the 2D tooth images, and the first set of tooth number probabilities for each pixel in the plurality of tooth type regions comprises:
inputting each of the 2D tooth images into a trained deep learning model, and obtaining the plurality of tooth type regions output by the deep learning model, and the first set of tooth number probabilities for each pixel in the plurality of tooth type regions.

5. The method according to any one of claims 1-4, **characterized in that** prior to inputting each of the 2D tooth images into the trained deep learning model, the method further comprises:
obtaining a sample 3D tooth model, and obtaining a plurality of initial sample 2D tooth images corresponding to multiple viewing angles of the 3D tooth model;
determining each tooth type region in each of the initial sample 2D tooth images, and determining a sample tooth number marking point in the central region of each tooth type region;
determining a sample tooth number region of each tooth type in each of the initial sample 2D tooth images by taking the sample tooth number marking point as the center point, wherein the sample tooth number region belongs to respective tooth type region;
obtaining marked sample 2D tooth images according to the sample tooth number regions corresponding to each tooth type region;
training model parameters of an initial deep learning model according to the initial sample 2D tooth images and the marked sample 2D tooth images to obtain the trained deep learning model.

6. The method according to any one of claims 1-5, **characterized in that** determining the second set of tooth number probabilities for each mesh patch according to the first set of tooth number probabilities comprises:
determining at least one associated pixel point corresponding to each mesh patch among the pixel points corresponding to the plurality of tooth type regions;
calculating a first probability mean value of at least one first tooth number probability corresponding to each candidate tooth number according to the at least one first set of tooth number probabilities corresponding to the at least one associated pixel point;
obtaining the second set of tooth number probabilities for each mesh patch with the first probability mean value as the second tooth number probability that each mesh patch belongs to respective candidate tooth number.

7. The method according to any one of claims 1-6, **characterized in that** determining at least one associated pixel point corresponding to each mesh patch among the pixel points corresponding to the plurality of tooth type regions comprises:
determining at least one observation viewing angle from which each mesh patch is observed among the plurality of viewing angles, and determining at least one 2D tooth image corresponding to the at least one observation viewing angle as at least one associated 2D tooth image;
obtaining at least one associated pixel point corresponding to each mesh patch by determining an associated pixel point corresponding to each mesh patch in each of the associated 2D tooth images.

8. The method according to any one of claims 1-7, **characterized in that** determining at least one associated pixel point corresponding to each mesh patch among the pixel points corresponding to the plurality of tooth type regions comprises:
mapping the plurality of 2D tooth images to the 3D tooth model according to a pre-determined coordinate conversion relationship;
determining, in each of the associated 2D tooth images, the pixel points belonging to each mesh patch as the associated pixel points according to the mapped 3D tooth model.

9. The method according to any one of claims 1-8, **characterized in that** determining the third set of tooth number probabilities for each mesh vertex according to the second set of tooth number probabilities comprises:
determining a plurality of associated mesh patches connected to each mesh vertex;
calculating a second probability mean value of a plurality of second tooth number probabilities corresponding to each candidate tooth number according to the plurality of second sets of tooth number probabilities corresponding to the plurality of associated mesh patches;
obtaining the third set of tooth number probabilities for the mesh vertex with the second probability mean value as the third tooth number probability that each mesh vertex belongs to respective candidate tooth number.

10. The method according to any one of claims 1-9, **characterized in that** determining the tooth number corresponding to each tooth type in the 3D tooth model according to the third set of tooth number probabilities comprises:
determining a maximum reference third tooth number probability in the third set of tooth number probabilities in each mesh vertex corresponding to each tooth type region;
determining the tooth number corresponding to each tooth type region according to all maximum reference third tooth number probabilities corresponding to all mesh vertices of each tooth type region;
determining a target third tooth number probability among all maximum reference third tooth number probabilities of the tooth numbers corresponding to each tooth type region;
determining a mesh vertex corresponding to maximum target third tooth number probability as a tooth number marking point, and determining the tooth number corresponding to the tooth number marking point as the tooth number corresponding to each tooth type region.

11. The method according to any one of claims 1-10, **characterized in that** prior to determining the tooth number corresponding to the tooth number marking point as the tooth number corresponding to each tooth type region, the method further comprises:
determining whether there are a plurality of to-be-filtered tooth number marking points belonging to a same tooth number;
if there are the plurality of to-be-filtered tooth number marking points belonging to the same tooth number, determining a marking distance between each to-be-filtered tooth number marking point and the tooth number marking points of other adjacent tooth numbers;
deleting the to-be-filtered tooth number marking points with the marking distance being less than a preset distance threshold.

12. A data processing apparatus based on a 3D Model, **characterized by** comprising:
an obtaining module, configured to obtain a 3D tooth model of a target oral cavity;
a determination module, configured to determine a tooth number corresponding to each tooth type in the target oral cavity according to the 3D tooth model.

13. An electronic device, **characterized by** comprising:
a processor;
a memory for storing executable instructions of the processor;
the processor is configured to read the executable instructions from the memory and execute the executable instructions to implement the data processing method based on a 3D model according to any one of the aforementioned claims 1-11.

14. A computer-readable storage medium, **characterized in that** the computer-readable storage medium stores a computer program, and the computer program is configured to execute the data processing method based on a 3D model according to any one of the aforementioned claims 1-11.
